# EUROPEAN PATENT APPLICATION

(11) **EP 3 395 770 A1**
(43) Date of publication of application: **31.10.2018**
(21) Application number: 15911252.3
(22) Date of filing: 21.12.2015
(51) Int. Cl.: C02F 1/68, B01J 47/00, B01J 49/00, C02F 1/28, C02F 1/42, C02F 1/44

(54) **MINERAL WATER ACQUISITION DEVICE**

(71) Applicant: Techno System Co.,Ltd., Yokohama-shi, Kanagawa 220-8119 (JP)
(72) Inventor: IKUTA, Kazumasa, Yokohama-shi Kanagawa 236-0054 (JP)
(74) Representative: Mounteney, Simon James
(86) International application number: PCT/JP2015/006344
(87) International publication number: WO 2017/109812

(57) **Abstract**

A portable mineral water acquisition device that has an internal power supply, a drive pump, and the like includes, in a portable housing: a control unit that receives electric power from a battery; the drive pump that is controlled by the control unit and uses the battery as an electric power supply; and a water purification device that softens treated water that is pumped by the drive pump and produces delicious water. The housing is composed of a box-shaped main body and a lid body. The water purification device is configured by a first water purification tank that is connected to a treated water supply pipe, provided in a single flow path that has a flow path switching valve, and includes an ion-exchange resin, a second water purification tank that includes a filter material, and a mineral addition tank that includes a mineral additive. During regeneration of the ion-exchange resin, a first flow path switching valve on the second water purification tank side is switched to a "closed" state and a second flow path switching valve on a discharge pipe side is switched to an "open" state. The first water purification tank is filled with regeneration water from the treated water supply pipe by driving force of the drive pump that is driven. The drive pump is subsequently stopped. After regeneration, the drive pump is started again. The regeneration water in the first purification tank is discharged through the discharge pipe while the treated water is introduced into the first purification tank.

## Description

### BACKGROUND OF THE INVENTION

### 1. Field of the Invention

The present invention relates to a mineral water acquisition device that can be easily carried to a desired location, such as a travel destination, a campsite, or a lodging facility.

### 2. Description of the Related Art

A water purification device that is usually commonly referred to as a "water purifier" removes residual chlorine by a filter material, such as activated carbon, and performs so-called purification. However, the water purifier is unable to remove calcium and magnesium contained in treated water. Therefore, a water purification device in Patent Literature 1 performs bacterial treatment in addition to softening hard water through combined use of an ion-exchange resin tank and a filter tank containing activated carbon or the like. As is well known, the ion-exchange resin tank softens hard water by removing Ca²+ and Mg²+ ions and thereby produces "delicious water."

However, although capable of softening hard water, the water purification device does not add minerals to the treated water that has been softened. In addition, the water purification device cannot be easily carried to a desired location, such as a travel destination, a campsite, or a lodging facility. Furthermore, a regeneration container for regeneration of the ion-exchange resin in the ion-exchange resin tank is connected to an upper portion of the ion-exchange resin tank. Therefore, when a regeneration process is performed, a problem occurs in that heavy labor is required.

Patent Literature 2 describes a water purification device that is connected to a water faucet and softens tap water through an ion-exchange resin tank. In a manner similar to Patent Literature 1, Patent Literature 2 also describes a water purification device in which a filter tank containing activated carbon or the like is used in combination with the ion-exchange resin tank. However, the water purification device in Patent Literature 2 has a complex structure and has problems similar to those of Patent Literature 1, for reasons such as a mineral addition tank not being included, tap water being used as source water, and a regeneration container being separately disposed in a flow path in an upper portion of the ion-exchange resin tank.

Patent Literature 3 describes a water purification device in which a plurality of filter tanks and a "mineral addition tank" are disposed in a flow path. However, the water purification device in Patent Literature 3 uses tap water as the source water. Therefore, the water purification device cannot be easily carried to a desired location, such as a travel destination, a campsite, or a lodging facility.

Patent Literature 4 describes a compact water purifier. In the compact water purifier, as a filter device, replaceable reverse-osmosis (RO) membrane filter device and ion-exchange resin tank are assembled in a portable box body. The compact water purifier can be easily carried mainly to travel destinations. However, the filter device requires replacement. In addition, because tap water available at the travel destination serves as the source water and commercial power supply is exclusively used, there is room for improvement regarding several points.

The ion-exchange resin that is used in a water softening device gradually loses treatment capability during the process of softening hard water. Therefore, to enable operation over an extended period, a regeneration process using regeneration water (salt water) is periodically required to be performed. However, while the regeneration process is being performed, operation of the water softening device is required to be temporarily stopped. Therefore, a reduction in operating efficiency of the water softening device is unavoidable. From this perspective, a battery-driven portable water softening device described in Patent Literature 5 includes the following to prevent the reduction in operating efficiency of the water softening device. That is, the portable water softening device includes, in a regeneration tank 9, a plurality of ion-exchange resin cartridges 7 and 8 that are connected by flow path switching valves 6 and 10, a water passage sensor 4 that is provided in a source water supply pipe, and a power mode switching control means (microcomputer) 17 that supplies a circuit current from a battery to a circuit that operates in operation mode when a signal from the water passage sensor 4 is a water supply signal and does not supply the circuit current when the signal is a water stop signal. The portable water softening device in Patent Literature 5 includes the battery, the control means 17, and the like in a compact box body. Therefore, the portable water softening device has advantages such as excellent operability, portability to any location, and low power consumption. However, because the source water is "tap water," the portable water softening device is problematic in that usage locations are limited (such as to a location where a faucet is available or a common household kitchen). (Reference numbers are based on those used in Patent Literature 5.)

[Patent Literature 1] Japanese Patent Laid-open Publication No. Heisei 9-47761
[Patent Literature 2] Japanese Patent Laid-open Publication No. Heisei 11-226571
[Patent Literature 3] Japanese Patent Laid-open Publication No. Heisei 11-104617
[Patent Literature 4] Japanese Patent Laid-open Publication No. 2013-107031
[Patent Literature 5] Japanese Patent Publication No. 3603323

### SUMMARY OF THE INVENTION

The present invention has been achieved to solve conventional issues such as those described above. A first object of the present invention is to provide a mineral water acquisition device that can be easily carried to a desired location, such as a travel destination, a campsite, or a lodging facility, is capable of "softening hard water" and producing "delicious water containing minerals," does not require replacement of an ion-exchange resin tank though operation is required to be temporarily stopped for maintenance, and further, minimizes labor through use of a drive pump when the ion-exchange resin tank is regenerated. A second object is to achieve excellent operability and safety. A third object is to enable a battery that is provided in a housing to acquire a direct-current power supply from at least a single power supplying means or more.

A mineral water acquisition device of the present invention includes, in a portable housing: a battery that stores electricity; a control unit that receives electric power from the battery; a drive pump that is controlled by the control unit and uses the battery as an electric power supply; and a water purification device that softens treated water that is pumped by the drive pump and produces delicious water. The housing is composed of a box-shaped main body that has an opening in an upper end and a case-shaped lid body that is provided in an openable/closable manner in the box-shaped main body. In addition, the water purification device is configured by a first water purification tank that is connected to a treated water supply pipe, provided in a single flow path that has a flow path switching valve, and includes an ion-exchange resin, a second water purification tank that is disposed on the flow path and includes a filter material, and a mineral addition tank that is disposed on the flow path. During regeneration of the ion-exchange resin, a first flow path switching valve on the second water purification tank side is switched to a "closed" state and a second flow path switching valve on a discharge pipe side is switched to an "open" state. The first water purification tank is filled with regeneration water from the treated water supply pipe by driving force of the drive pump that is driven. The drive pump is subsequently stopped. After regeneration, the drive pump is started again. The regeneration water in the first purification tank is discharged through the discharge pipe while the treated water is introduced into the first purification tank.

In the above-described configuration, when mineral water is acquired from an outflow hose that can be connected to the flow path, the second flow path switching valve on the discharge pipe side connected to the flow path is switched to the "closed" state and the first flow path switching valve is switched to the "open" state. The treated water is sent to the water purification device from the treated water supply pipe by the driving force of the drive pump that is driven.

In addition, the battery, the control unit, and the drive pump are disposed inside the case-shaped lid body, while at least the first water purification tank, the second water purification tank, and the mineral addition tank are disposed together inside the box-shaped main body.

Furthermore, the second water purification tank is disposed further downstream than the first water purification tank, and further downstream than the flow path switching valve that is provided in a pipe of the flow path that connects the first water purification tank and the second water purification tank. In addition, the filter material of the second water purification tank includes at least one of either activated carbon and a hollow filter membrane.

Moreover, a mineral agent provided inside the mineral addition tank includes at least one or more of mineral additives in which adjusted weathered coral, natural ore, bioceramic, and a calcium material and a magnesium material are formed into granules or particles. Furthermore, a motor of the drive pump uses a direct-current power supply as a startup power supply.

The battery that is provided inside the housing can be connected to a vehicle-mounted battery by a connecting means including a cigar lighter socket. In addition, the battery that is provided inside the housing can be electrically connected to a photovoltaic power generation device by an input terminal. The photovoltaic power generation device is composed of a solar box that is a horizontally elongated rectangular parallelepiped in shape, a rectangular solar panel that is rotatably provided inside the solar box with a rotation shaft therebetween, and a handle that is attached to a free end portion of the solar panel. The solar panel can be pulled out in a carpet-like manner from a horizontally elongated cutout window that is formed in one side wall of the solar box as a result of the handle being operated.

Furthermore, the battery that is provided inside the housing is electrically connected to a photovoltaic power generation device. The photovoltaic power generation device is a solar panel that is wound around a rotation shaft inside the housing. The solar panel can be pulled out in a carpet-like manner from a horizontally elongated cutout window that is formed in one side wall of the housing.

Moreover, the battery that is provided inside the housing can be connected to a commercial alternating-current power supply with a converter and a conductive cable therebetween.

The above-described objects, other objects, and novel characteristics of the present invention will become more completely clear through reading of the description below, with reference to the accompanying drawings. However, the drawings are provided solely for explanatory purposes and do not limit the technical scope of the present invention.

### EFFECTS OF THE INVENTION

(a) According to a first aspect of the invention, the mineral water acquisition device can be easily carried to a desired location, such as a travel destination, a campsite, or a lodging facility, and is capable of easily producing "hard water has been softened and delicious mineral water containing minerals." Although operation is required to be temporarily stopped for maintenance, the ion-exchange resin tank is not required to be replaced. Furthermore, when the ion-exchange resin is regenerated, the drive pump is used. Therefore, labor is not necessary.
(b) According to a second aspect of the invention, when mineral water is acquired from the outflow hose that can be connected to the flow path, the second flow path switching valve on the discharge pipe side connected to the flow path is switched to the "closed" state and the first flow path switching valve is switched to the "open" state. The treated water is sent to the water purification device from the treated water supply pipe by the driving force of the drive pump that is driven. Therefore, operation is easy. In particular, in the case of a configuration in which the flow path switching valve is manually operated, a flow rate sensor, an electromagnetic valve, and the like are unnecessary.
(c) According to a third aspect of the invention, the battery, the control unit, and the drive pump are disposed inside the case-shaped lid body, while at least the first water purification tank, the second water purification tank, and the mineral addition tank are disposed together inside the box-shaped main body. Therefore, a conductive cable is not at all required to be extended to the box-shaped main body side. Consequently, because the conductive cable is unaffected even when the case-shaped lid body is repeatedly opened and closed using hinges, a protector that encases the conductive cable is unnecessary.
(d) According to a fourth aspect of the invention, the second water purification tank is disposed further downstream than the first water purification tank, and further downstream than the flow path switching valve that is provided in a pipe of the flow path that connects the first water purification tank and the second water purification tank. Therefore, during regeneration of the ion-exchange resin of the first water purification tank, the regeneration water can be prevented from entering the second water purification tank. That is, the regeneration water can be removed from the first water purification tank by the flow path switching valve being appropriately operated.
(e) According to a fifth aspect of the invention, the filter material of the second water purification tank includes at least one of either activated carbon and a hollow filter membrane. Therefore, odors, coloring components, other organic matter, decomposed matter eluted by the ion-exchange resin, low-molecular substances, and the like contained in the treated water can be adsorbed and removed. Furthermore, bacteria, miniscule suspended matter, and the like can be removed according to an embodiment in which the hollow fiber membrane is included in addition to the activated carbon. As a result, safe and delicious water can be produced.
(f) According to a sixth aspect of the invention, a mineral agent provided inside the mineral addition tank includes at least one or more of mineral additives in which weathered coral, natural ore, or bioceramic is adjusted into a granular form, and a calcium material and a magnesium material that are in a granular form or a particulate form. Therefore, hard water can be softened and delicious mineral water that contains minerals can be ultimately produced. The mineral agent preferably includes two or more types that are appropriately selected to enable delicious mineral water that contains even more minerals .
(g) According to a seventh aspect of the invention, a motor of the drive pump uses a direct-current power supply as a startup power supply. Therefore, the mineral water acquisition device has excellent safety and compactness. In particular, to actualize safety, compactness, and the like, the drive pump is preferably driven by a direct-current voltage of 12 V.
(h) According to an eighth aspect of the invention, a vehicle-mounted battery can be used as an external direct-current power supply.
(i) According to a ninth aspect of the invention, the battery that is provided inside the housing can be electrically connected to a photovoltaic power generation device. The photovoltaic power generation device is composed of a solar box that is a horizontally elongated rectangular parallelepiped in shape, a solar panel that is rotatably provided inside the solar box with a rotation shaft therebetween, and a handle that is attached to a free end portion of the solar panel. The solar panel can be pulled out in a carpet-like manner from a horizontally elongated cutout window that is formed in one side wall of the solar box as a result of the handle being operated. Therefore, natural energy can be used and the amount of power generation can be increased.
(j) According to a tenth aspect of the invention, natural energy can be immediately used. In addition, effects similar to those according to the ninth aspect of the invention can be achieved.
(k) According to an eleventh aspect of the invention, the battery can be connected to a commercial alternating-current power supply. Therefore, soft water for coffee and tea, and delicious mineral water containing minerals can be produced at home or at a lodging facility at a travel destination. Of course, hard water can be softened and used as a measure against atopy.

### BRIEF DESCRIPTION OF THE DRAWING

Fig. 1 to Fig. 10 are explanatory diagrams according to a first embodiment of the present invention. Fig. 11 and Fig. 12 are explanatory diagrams according to a second embodiment of the present invention.
Fig. 1 is a front view of a housing in a state in which a lid body is closed;
Fig. 2 is a perspective view of the housing in a state in which the lid body is open;
Fig. 3 is an overall explanatory diagram of each section housed inside the housing;
Fig. 4 is an overall explanatory diagram of each section provided inside the housing (including a state in which a photovoltaic power generation device is removed from the housing);
Fig. 5 is an overall conceptual diagram of connection to external power supplies;
Fig. 6 is a block diagram of a water purification device; Fig. 7 is an overall explanatory diagram of an example of a first water purification tank;
Fig. 8 is an overall explanatory diagram of an example of a second water purification tank;
Fig. 9 is an overall explanatory diagram of an example of a mineral addition tank;
Fig. 10 is a block diagram of an electrical system including a drive pump;
Fig. 11 is an explanatory diagram of regeneration;
Fig. 12 is a perspective view according to a second embodiment of the present invention (in a state in which a photovoltaic power generation device is assembled in a housing) ; and
Fig. 13 is an explanatory diagram of a state in which a solar panel is pulled out from a side wall of the housing.

### EXPLANATION OF REFERENCE NUMBERS

X: mineral water acquisition device
1: housing
1a: box-shaped main body
1b: case-shaped lid body
3: hinge
4: handle
5: fastening clasp
7: battery
8: control unit
9: operating panel
11: input terminal
12: cigar lighter socket
15: drive pump (drive means)
L: flow path
W: treated water
MW: mineral water
S: regeneration water (salt water)
20: water purification device
21: first water purification tank
22: second water purification tank
23: mineral addition tank
24: flow path switching valve
24a: first flow path switching valve
24b: second flow path switching valve
30, 30A: photovoltaic power generation device
38: vehicle-mounted battery
39: commercial power supply
40: converter (AC/DC converter)
45: treated water supply pipe (suction hose)
51: joint
52: discharge pipe
53: outflow hose

### DETAILED DESCRIPTION OF THE PREFERRED EMBODIMENTS

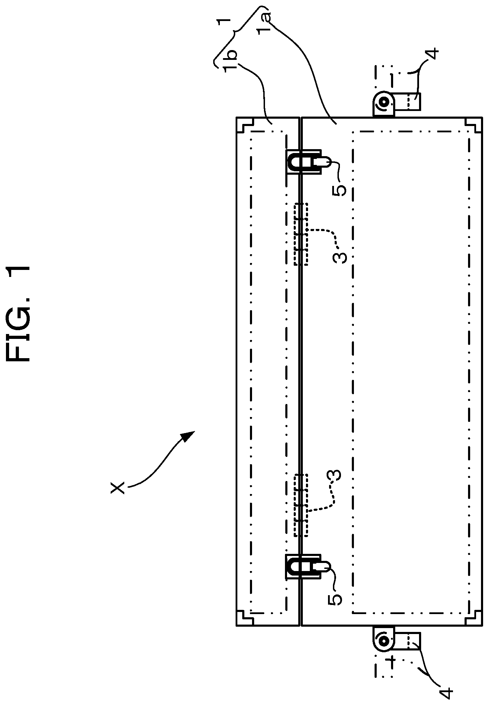

Fig. 1 to Fig. 10 are drawings according to a first embodiment of the present invention. First, usage locations of the present invention will be briefly described. X is a mineral water acquisition device that can be easily carried to a desired location, such as a travel destination, a campsite, or a lodging facility, and is capable of "softening hard water" and producing "delicious water containing minerals."

The mineral water acquisition device X includes, in a portable housing 1, a battery 7, a control unit 8, an operating panel 9, a drive pump 15, and a water purification device, described hereafter. The battery 7 stores electricity. The control unit 8 receives electric power from the battery 7. The operating panel 9 is provided with a power switch 10 and the like. The drive pump 15 is controlled by the control unit 8 and uses the battery 7 as an electric power source. The water purification device softens treated water (source water) that is pumped by the drive pump 15 and produces "delicious water."

The treated water is water from a water source, such as well water, river water, or lake water. Of course, in a home or at a workplace, tap water can be placed in a treated water container, such as a bucket or a tank, and used as the treated water as well.

The housing 1 of the mineral water acquisition device X is a housing case composed of aluminum or duralumin. In a manner similar to a suitcase for travel, the housing 1 is a rectangular parallelepiped in shape and can be carried with one hand or both hands.

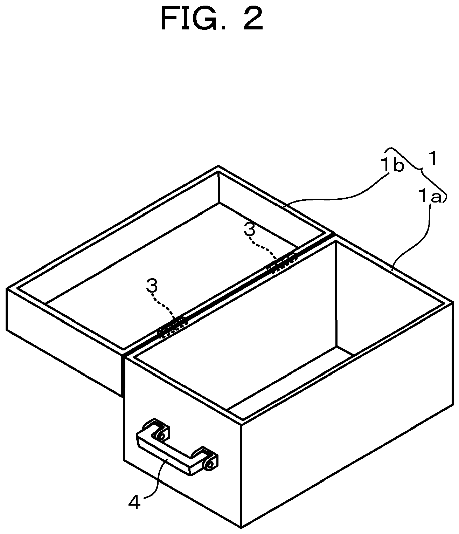

Next, a configuration of the housing 1 will be described with reference to Fig. 1 and Fig. 2. The overall housing 1 is formed into a rectangular parallelepiped that has six surfaces. Fig. 1 is a front view of the housing 1 in a state in which a lid body is closed. Meanwhile, Fig. 2 is a perspective view of the housing 1 in a state in which the lid body is open.

As shown in Fig. 2, the housing 1 is composed of a box-shaped main body 1a and a case-shaped lid body 1b. The box-shaped main body 1a has an opening on an upper end. The case-shaped lid body 1b is provided in an openable/closable manner in the box-shaped main body 1a with a plurality of hinges 3 therebetween. The bottom of the box-shaped main body 1a is substantially about twice as deep as a typical suitcase for travel.

However, should the number of drive pumps 15, which is driven by a direct-current (DC) voltage of 12 V, be "one" and the number of water purification devices 20, described hereafter, be reduced, the housing 1 can be made as compact as a typical suitcase.

With reference to Fig. 1, a pair of left and right rotating handles 4 and 4 are provided in a supported manner, in substantially center portions of left and right side walls of the case-shaped lid body 1b. In addition, a pair of left and right fastening clasps 5 and 5 are provided in opening end portions (edge portions) of the box-shaped main body 1a and the case-shaped lid body 1b. Although not particular shown in the drawings, for example, a total of four swivel casters may be provided in the four corners of a bottom wall or one side wall of the box-shaped main body 1a. In addition, the rotating handles 4 may be provided in other locations as appropriate.

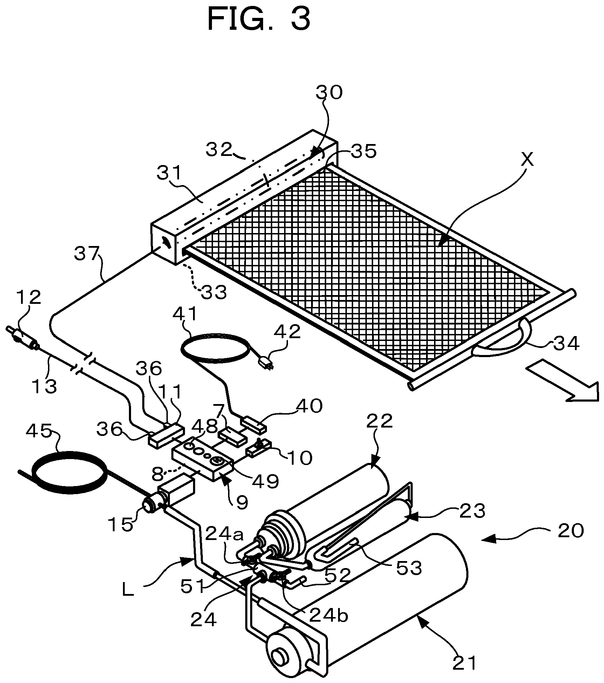

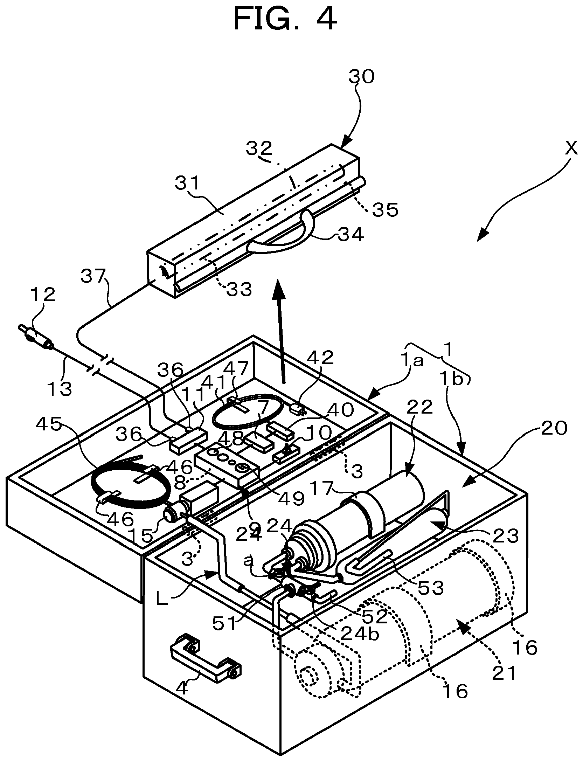

Next, Fig. 3 is an overall explanatory diagram of each section that can be housed inside the housing 1. In addition, Fig. 4 shows the state of each section housed inside the housing 1. As is clear from Fig. 3 and Fig. 4, an electrical system and the drive pump 15 are housed or disposed in the case-shaped lid body 1b. Meanwhile, the water purification device 20 and a photovoltaic power generation device 30 are exclusively housed or disposed in the box-shaped main body 1b.

That is, the battery 7 that can be connected to an external power supply such as the photovoltaic power generation device 30, the control unit 8 that is provided inside an unnumbered control box, the operating panel 9 that is provided in an upper end portion of the control box, the power switch 10 and the like that are provided on the operating panel 9, and the drive pump 15 that is electrically connected to the battery 7 and the control unit 8 are disposed inside the case-shaped lid body 1b. Meanwhile, at least a first water purification tank 21, a second water purification tank 22, and a mineral addition tank 23 are arranged together in a horizontal state inside the box-shaped main body 1a.

In addition, according to the embodiment, the second water purification tank 22 is disposed further downstream than the first water purification tank 21, and further downstream than a flow path switching valve 24. The flow path switching valve 24 is provided in a pipe of a flow path that connects the first water purification tank 21 and the second water purification tank 22. The first water purification tank 21 is supported by first supporting means 16 and 16. The first supporting means 16 is band-shaped from a front view. In addition, the second water purification tank 22 is also supported by a second supporting means 17. The second supporting means 17 is also band-shaped from a front view.

When the electrical system, such as the control unit 8 and the operating panel 9, are disposed in the case-shaped lid body 1b, and either of the battery (electrical storage unit) 7 and the drive pump 15 or both are disposed in the box-shaped main body 1a, for example, a cable that electrically connects the control unit 8 and the drive pump 15 is required to be extended from the case-shaped lid body 1b to the box-shaped main body 1a. Therefore, a protective member (such as a coil spring, a flexible component, or a support) for the cable is required.

Therefore, while the photovoltaic power generation device 30 is provided inside the housing 1 in addition to the battery (electrical storage unit) 7, the control unit 8, the operating panel 9, the power switch 10, the drive pump 15, and the water purification device 20 that is provided in a single flow path L, according to the embodiment, the battery 7, the control unit 8, the operating panel 9, the power switch 10, the drive pump 15, and the like are appropriately disposed inside the case-shaped lid portion 1b. Meanwhile, the first water purification tank 21, the second water purification tank 22, and the mineral addition tank 23 that configure the water purification device 20 are arranged together in the horizontal state or a vertical state inside the box-shaped main body 1a. In addition, as shown in Fig. 4, a space for housing the photovoltaic power generation device 30 is also secured inside the box-shaped main body 1a.

The water purification device 24 of the present invention is configured by the first water purification tank 21, the second water purification tank 22, and the mineral addition tank 23. The first water purification tank 21 is connected to a treated water supply pipe (suction hose) 45 and is provided in the single flow path L that has the flow path switching valve 24. The first water purification tank 21 includes an ion-exchange resin. The second water purification tank 22 is disposed on the flow path L and includes a filter material. The mineral addition tank 23 is disposed on the flow path L and includes a mineral additive. When the ion-exchange resin is regenerated, the flow path switching valve 24 can be manually switched. The first water purification tank 21 can then be filled with regeneration water (salt water) through use of the driving force of the drive pump 15. In addition, when the regeneration water is discharged from the first water purification tank 21, the regeneration water (salt water) can be discharged outside through a discharge pipe that is connected to the flow path, while leading the treated water to the mineral addition tank 23 through use of the driving force of the drive pump 15, again.

In addition, the photovoltaic power generation device 30 can be electrically connected to the battery 7 inside the housing 1 by an input terminal 11. According to the embodiment, as shown in Fig. 3, the photovoltaic power generation device 30 is configured by a solar box 31, a solar panel 33, and a handle 34. The solar box 31 is a horizontally elongated rectangular parallelepiped in shape. The solar panel 33 is rectangular and rotatably provided inside the solar box 31 with a rotation shaft 32 therebetween. The handle 34 is attached to a free end portion of the solar panel 33. As a result of the handle 34 being operated, the solar panel 33 can be pulled out directly from a horizontally elongated cutout window 35 that is formed in one side wall of the solar box 31. The rectangular solar panel 33 can be wound by a winding means that includes a release spring provided in an end portion of the rotation shaft 32 (not shown) . Furthermore, a connection cable 37 that has a connection terminal 36 is also provided in the end portion.

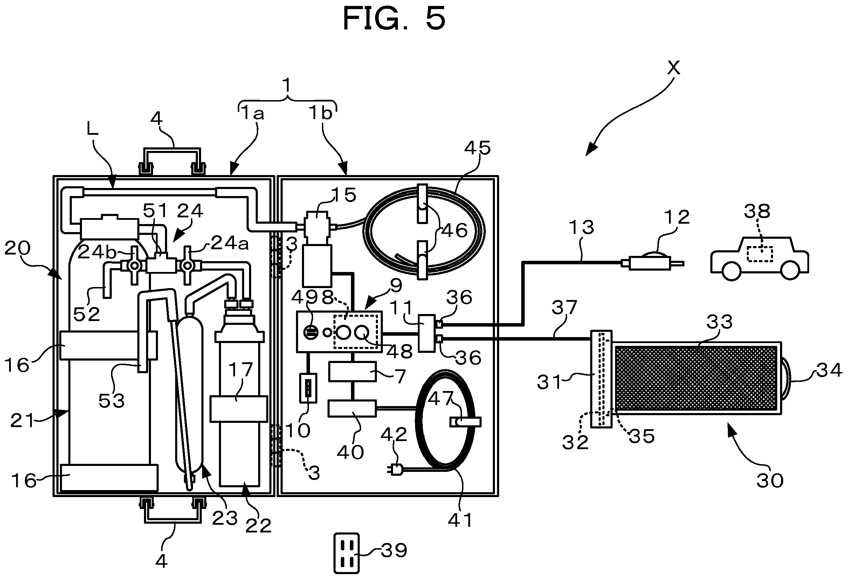

Fig. 5 conceptually shows the battery (electrical storage unit) 7, the electrical system such as the control unit 8 and the operating panel 9, and the drive pump 15 disposed inside the case-shaped lid body 1b, the water purification device 20 disposed in the box-shaped main body 1a, and a plurality of external power supplies that are connected to the electrical system and the battery 7. According to the embodiment, the external power supplies are at least "two direct-current power supplies." One of the direct-current power supplies is a vehicle-mounted battery 38.

Therefore, the battery 7 in the housing 1 can be connected to the vehicle-mounted battery 38 by a connecting means 13, including a cigar lighter socket 12. The other external power supply is the above-described photovoltaic power generation device 30. As shown in Fig. 4, the photovoltaic power generation device 30 can be freely removed from the box-shaped main body 1a. When the connection terminal 36 of the photovoltaic power generation device 30 is connected to the input terminal 11 and the solar panel 33 is pulled out directly from the cutout window 35 in the solar box 31 as a result of the handle 34 being operated, the solar panel 33 becomes elongated in a manner similar to a sheet or a carpet.

Furthermore, although not necessarily required according to the embodiment, an alternating-current (AC) power supply may be used, taking into consideration a situation in which the mineral water acquisition device is used during travel. In this case, the battery 7 in the housing 1 can be connected to a commercial AC power supply 39 of 100 V or 200 V, with a converter (AC/DC converter) 40, a conductive cable 41, and a plug 42 therebetween.

A plurality of first supports 46 that support the treated water supply pipe (suction hose) 45 that can be connected to the single flow path L with the drive pump 15, which has a motor that is driven by DC 12 V, therebetween are appropriately provided on an inner wall surface of the case-shaped lid body 1b. In addition, a second support 47 that supports the above-described conductive cable 41 is also appropriately provided on the inner wall surface.

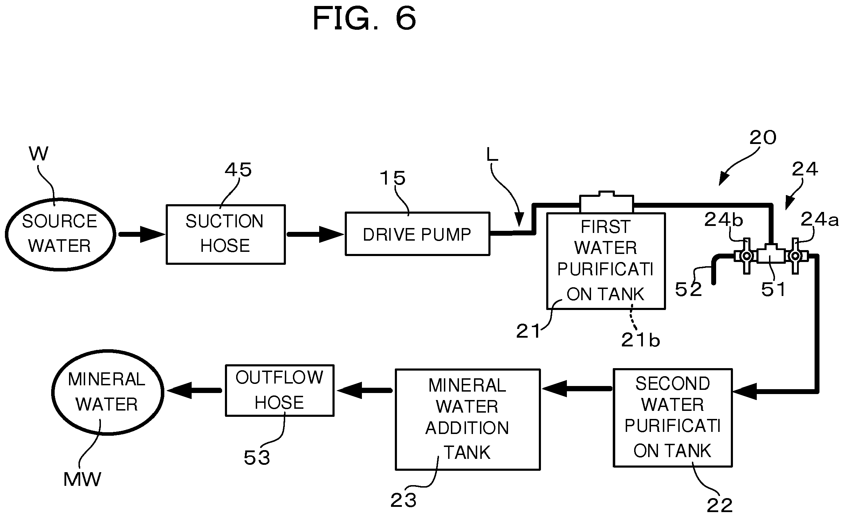

Fig. 6 is an overall explanatory diagram of a flow in which mineral water MW is produced from source water W. The source water W is hard water, such as tap water drawn from a faucet in a hotel at a travel destination or well water. At a campsite, the source water W is water from a lake or a river. The drive pump 15 draws the source water W through the suction hose 45 and pumps the source water W to the water purification device 30 through the flow path L. According to the embodiment, the above-described flow path switching valve 24 is provided in the flow path that connects the first water purification tank 21 and the second water purification tank 22, with a T-shaped joint 51 therebetween. With reference to the joint 51, a first flow path switching valve 24a provided on one end portion of the joint 51 opens and closes the flow path of the second water purification tank 22. Meanwhile, a second flow path switching valve 24b provided on another end portion of the joint 51 to which a discharge pipe 52 is connected is used to discharge the regeneration water (salt water).

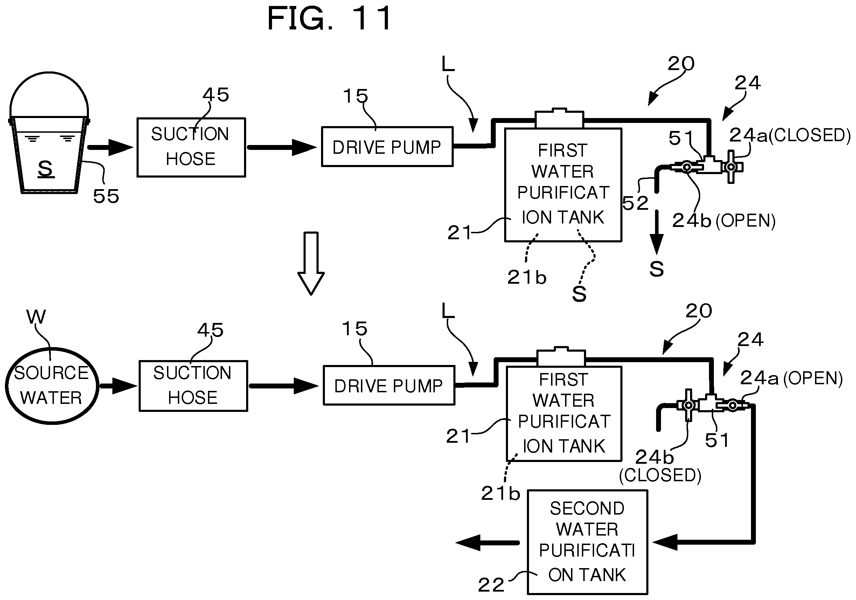

That is, according to the embodiment, as shown in Fig. 11, during regeneration of the ion-exchange resin, the first flow path switching valve 24a on the second water purification tank 22 side is switched to a "closed" state. The second flow path switching valve 24b on the discharge pipe 52 side is switched to an "open" state. The first water purification tank 21 is then filled with the regeneration water S from the treated water supply pipe 45 by the driving force of the drive pump 15 that is driven. Subsequently, the drive pump 15 is stopped. After regeneration, the drive pump 15 is started again. The regeneration water S in the first purification tank 21 is discharged through the discharge pipe 52 while the treated water W is introduced into the first purification tank 21.

When the mineral water MW is acquired from an outflow hose 53 that can be connected to the flow path L, the second flow path switching valve 24b on the discharge pipe 52 side connected to the flow path L is switched to the "closed" state. In addition, the first flow path switching valve 24a is switched to the "open" state. The treated water W is sent to the water purification device 20 from the treated water supply pipe 45 by the driving force of the drive pump 15 that is driven. In this way, when the "delicious water containing minerals" is to be acquired, the open/closed states of the valves 24a and 24b are required to be reversed. In addition, when the first flow path switching valve 24a is in the "open" state and the second flow path switching valve 24b is in the "closed" state and the power switch 10 is turned "ON," for example, because a DC 12 V motor or a DC 24 V motor, depending on the embodiment, is used as the drive pump 15, the drive pump 15 is "safely" driven. The source water W sufficiently flows into the first water purification tank 21 via the suction hose 45 and the drive pump 15.

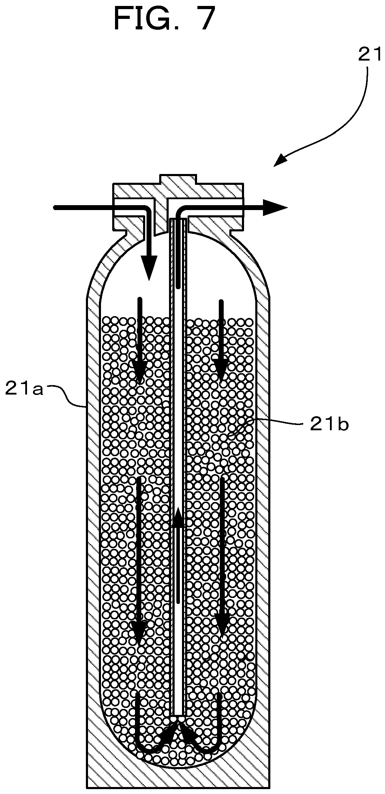

According to the embodiment, as shown in Fig. 7, the first water purification tank 21 is composed of a circular cylindrical ion-exchange tank main body 21a and an ion-exchange resin 21b that is provided inside the ion-exchange tank main body 21a. The ion-exchange tank main body 21a has an inflow opening in an upper portion and an outflow opening in the upper portion. The ion-exchange resin 21b is preferably a chloride ion-type strong-base negative ion-exchange resin. As a result of the chloride ion-type strong-base negative ion-exchange resin, nitrate nitrogen and nitrite nitrogen contained in the source water are removed by ion exchange. In this manner, the ion-exchange resin 21b of the first water purification tank 21 is a negative ion-exchange resin that is capable of dissolving neutral salt regardless of the pH level of the source water. In addition to a configuration in which the first water purification tank 21 includes only the ion-exchange resin 21b in the ion-exchange tank main body 21a, the first water purification tank 21 may also include a ceramic adsorbent, which is an adsorbent for heavy metals, together with the ion-exchange resin 21b.

The treated water that has entered the first water purification tank 21 from the inflow opening in the upper portion exits from the outflow opening in the upper portion after passing through the negative ion-exchange resin 21b. The treated water that has passed through the first purification tank 21 then flows into the second purification tank 22.

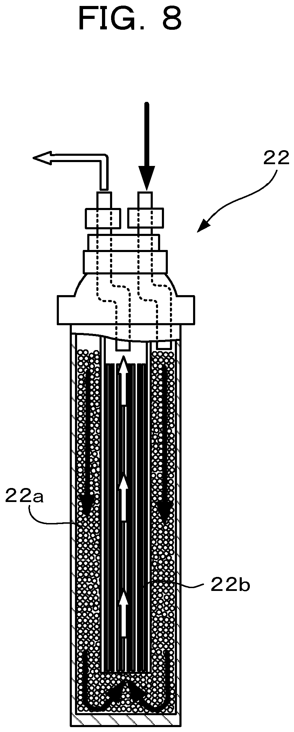

As shown in Fig. 8, the filter material of the second purification tank 22 includes at least either of activated carbon and a hollow fiber membrane. According to the embodiment, the second water purification tank 22 is composed of a circular cylindrical activated tank main body 22a, a hollow fiber membrane 22b that is disposed in a substantially center portion of the activated tank main body 22a, activated carbon 21c that fills between an outer surface of a peripheral body portion of the hollow fiber membrane 22b and an inner surface of the activated tank main body 22a and is adjusted into a fibrous form or a granular form, and more preferably, a bioceramic 21d that is adjusted into a fibrous form or a granular form. The activated tank main body 22a has an unnumbered inflow opening and exit.

In the second water purification tank 22, odors, coloring components, other organic matter, decomposed matter eluted by the ion-exchange resin 21b, low-molecular substances, and the like contained in the treated water W are adsorbed and removed by the activated carbon 21c. Furthermore, bacteria, miniscule suspended matter, and the like are removed by the hollow fiber membrane 22b. As a result, safe and delicious water can be produced. Here, the activated carbon 22c used in the second water purification tank 22 is not particularly limited as long as the activated carbon can be used in typical water purifiers. For example, natural activated carbon, such as coconut shell charcoal, bone char, and wood charcoal, and synthetic activated carbon, such as pitch-based, petroleum coke-based, and resin- or rubber-based activated carbon can be given. Activation method of the activated carbon 22c may be an arbitrary method such as a steam activation method or a chemical activation method. In addition, the activated carbon 22c may be in any form, such as powder, granules, or fiber. Furthermore, the activated carbon 22c may be impregnated with an antimicrobial metal, such as silver, by plating or the like.

In addition, the hollow fiber membrane 22b used in the second water purification tank 22 is not particularly limited as long as the hollow fiber membrane is a porous hollow fiber membrane that can be used in typical water purifiers. A porous hollow fiber membrane composed of cellulose-based materials, polyolefin-based materials such as polyethylene, polysulfone-based materials, polyvinyl alcohol-based materials, and the like are preferable. In addition, to improve passage of water and ensure re-passage of water, the hollow fiber membrane 22b is preferably imparted hydrophilicity by an ethylene vinyl alcohol copolymer or the like. As a result of the treated water W passing through the second water purification tank 22, decomposed matter, low-molecular substances, coloring components, odor components, bacteria, and miniscule harmful matter eluted by the chloride ion-type strong-base negative ion-exchange resin 21b or contained in the treated water W are removed, and safer water can be produced.

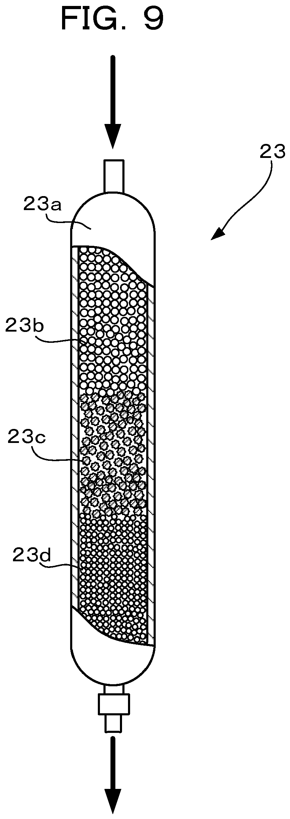

Finally, the treated water W that has passed through the second water purification device 22 flows to the mineral addition tank 23 that has a mineral additive. The mineral additive of the mineral addition tank 23 includes at least one or more of weathered coral, natural ore, and bioceramic that are adjusted into a granular form, and a calcium material and a magnesium material that are in a granular form or a particulate form. According to the embodiment, as shown in Fig. 9, the mineral addition tank 23 includes a tank main body 23a, and granulated coral 23b, a granulated natural ore (such as maifan stone) 23c, a granulated bioceramic 23d, and other mineral additives that are provided in a layered state inside the tank main body 23a from an inflow opening of the tank main body 23a to an outflow opening thereof.

Here, the mineral addition tank 23 is replaceable. In addition, an RO membrane filter (reverse-osmosis membrane for seawater; not shown) may be provided in a final flow path of the water purification device 20 according to the embodiment. When this water purification tank 23 is taken into consideration, for example, a DC 24 V motor is preferably used as the drive pump 15.

Therefore, as a result of minerals being eluted from the mineral additives, the treated water W that has passed through the mineral addition tank 23 becomes not simply clean potable water. "Delicious mineral water MW containing minerals" and in which "hard water has been softened" can be acquired from the outflow hose 53.

Although not particularly shown in the drawings, for example, a pressure adjustment valve can be provided in an appropriate location on the flow path L according to the embodiment. A pressure gauge 48 can monitor the pressure state of the flow path L.

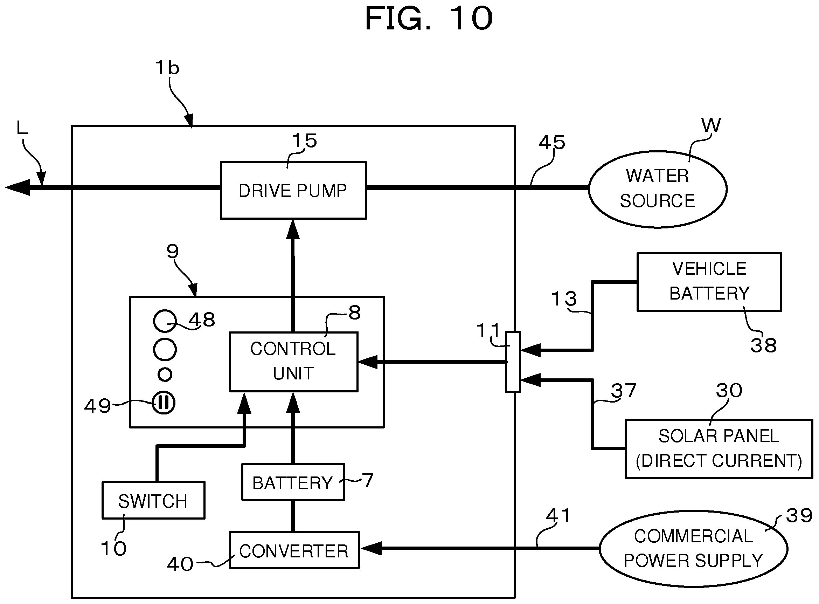

Fig. 10 is a block diagram of a drive control system for the solar panel 33, the control unit 8 within the control box, the battery 7, the drive pump 15, and the like. As shown in Fig. 4, when the case-shaped lid body 1b is opened, the operating panel 9 on the upper surface of the control box appears. The operating panel 9 is provided with the power switch 10 for the drive pump 15, the pressure gauge 48 that indicates a pressure state of each drive pump 15, and an electric outlet 49 for connecting a plug of an external device.

As described above, the battery 7 that serves as an internal power supply that can be electrically connected to the photovoltaic power generation device 30 is provided inside the housing 1 according to the embodiment. Therefore, a plurality of batteries 7 that store the electricity generated by the photovoltaic power generation device 30 through a charging circuit is preferably provided, rather than a single battery 7.

Fig. 11 is an overall explanatory diagram of when the ion-exchange resin 21b of the first water purification tank 21 is regenerated. As described above, during regeneration, when the first water purification tank 21 is completely filled with the regeneration water (salt water) S, the first flow path switching valve 24a is set to the "closed" state and the second flow path switching valve 24b is set to the "open" state. In addition, before the drive pump 15 is started, the "salt water" is appropriately prepared in advance. For example, the salt water is prepared in a bucket. Alternatively, a salt water container 55 is used. The free end portion of the treated water supply pipe (suction hose) 45 is placed in the bucket or the salt water container 55. In this state, the drive pump 15 is started. Then, the regeneration water (salt water) S that enters the flow path L enters the ion-exchange tank main body 21a from the inflow opening. The regeneration water (salt water) S that enters the ion-exchange tank main body 21a sends the treatment water W that has remained inside the ion-exchange tank main body 21a through the joint 51 and the second flow path switching valve 24b, and discharges the treated water W outside from the discharge pipe 52. When this state continues, the inside of the ion-exchange tank main body 21a changes to the "regeneration water (salt water) S." Therefore, the user may stop the drive pump 15 when regeneration is deemed sufficient. When the ion-exchange tank main body 21a becomes filled with the regeneration water (salt water) S, the ion-exchange resin 21b is regenerated after being left standing for about 20 to 30 minutes.

When the ion-exchange resin 21b is regenerated, the drive pump 15 is started again. The regeneration water (salt water) S that fills the ion-exchange tank main body 21a may be gradually discharged outside through the joint 51, the second flow path switching valve 24b, and the discharge pipe 52, while the treated water W is introduced into the first water purification tank 21 through the treated water supply pipe 45. As a result, the regeneration water (salt water) S can be easily switched to treated water W without labor, such as the regeneration water (salt water) S being lifted out of the ion-exchange tank main body 21a.

Subsequently, as described above, the first flow path switching valve 24a may be set to the "open" state and the second flow path switching valve 24b may be set to the "closed" state. As a result, the treated water W that has been treated in the first water purification tank 21 flows into the second water purification tank 22 through the first flow path switching valve 24a without being discharged from the second flow path switching valve 24b.

### Examples

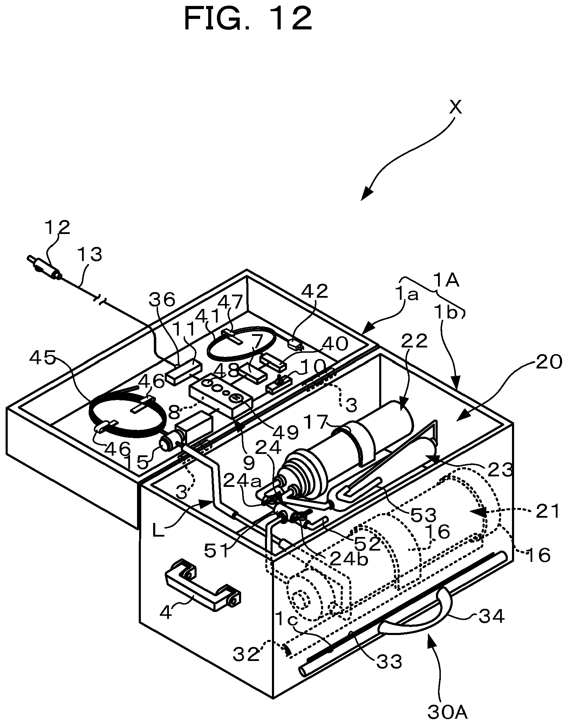

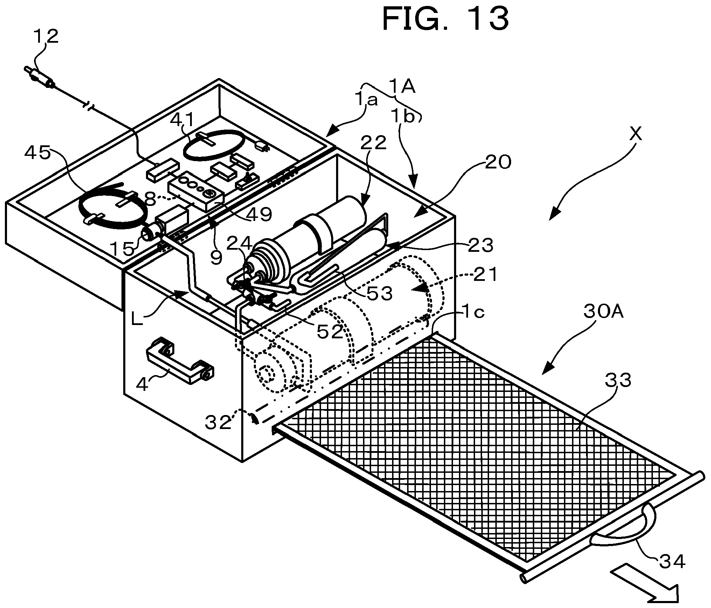

In this part, a second embodiment will be described with reference to Fig. 12 and Fig. 13. In the description according to the second embodiment, sections that are identical to those according to the first embodiment will be given the same reference numbers. Redundant descriptions are omitted.

The second embodiment mainly differs from the first embodiment regarding a photovoltaic power generation device 30A. The photovoltaic power generation device 30A is not a type that can be freely removed from a housing 1A. Rather, the photovoltaic power generation device 30A is disposed at all times on an inner surface side of one side wall, together with the water purification device 20, inside the box-shaped main body 1a of the housing 1A.

That is, the photovoltaic power generation device 30A is similar to that according to the first embodiment in that the photovoltaic power generation device 30A is configured by the solar box 31 that is a horizontally elongated rectangular parallelepiped in shape, the rectangular solar panel 33 that is rotatably provided inside the solar box 31 with the rotation shaft 32 therebetween, and the handle 34 that is attached to the free end portion of the solar panel 33. In addition, the solar panel 33 can be pulled out of the solar box 31 as a result of the handle 34 being operated. However, according to the second embodiment, the solar panel 33 can be pulled out directly in a substantially horizontal direction from a horizontally elongated cutout window 1c that is formed in one side wall of the housing 1A. When the solar panel 33 is pulled out from the cutout window 1c, the rotation shaft 32 rotates in a state in which the rotation shaft 32 is supported by left and right side walls of a support member that is provided in a fixed manner in the solar box 31 or the box-shaped main body 1a. The solar panel 33 that is pulled out from the housing 1A enters a state in which the solar panel 33 is spread widely on a floor surface or a ground surface. As a result, the amount of power generation can be increased. The rectangular solar panel 33 can be wound by a winding means that is provided in an end portion of the rotation shaft 32 (not shown).

### INDUSTRIAL APPLICABILITY

In particular, the present invention is used to produce "delicious water containing minerals" at a travel destination, a campsite, a home, or the like.

## Claims

1. A mineral water acquisition device comprising, in a portable housing:
a battery that stores electricity;
a control unit that receives electric power from the battery;
a drive pump that is controlled by the control unit and uses the battery as an electric power supply; and
a water purification device that softens treated water that is pumped by the drive pump and produces delicious water, wherein
the housing is composed of a box-shaped main body that has an opening in an upper end and a case-shaped lid body that is provided in an openable/closable manner in the box-shaped main body,
the water purification device is configured by a first water purification tank that is connected to a treated water supply pipe, provided in a single flow path that has a flow path switching valve, and includes an ion-exchange resin, a second water purification tank that is disposed on the flow path and includes a filter material, and a mineral addition tank that is disposed on the flow path, and
during regeneration of the ion-exchange resin, a first flow path switching valve on the second water purification tank side is switched to a "closed" state and a second flow path switching valve on a discharge pipe side is switched to an "open" state, the first water purification tank is filled with regeneration water from the treated water supply pipe by driving force of the drive pump that is driven, the drive pump is subsequently stopped, and after regeneration, the drive pump is started again, and the regeneration water in the first purification tank is discharged through the discharge pipe while the treated water is introduced into the first purification tank.

2. The mineral water acquisition device according to claim 1, wherein:
when mineral water is acquired from an outflow hose that can be connected to the flow path, the second flow path switching valve on the discharge pipe side connected to the flow path is switched to the "closed" state and the first flow path switching valve is switched to the "open" state, and the treated water is sent to the water purification device from the treated water supply pipe by the driving force of the drive pump that is driven.

3. The mineral water acquisition device according to claim 1, wherein:
the battery, the control unit, and the drive pump are disposed inside the case-shaped lid body, while at least the first water purification tank, the second water purification tank, and the mineral addition tank are disposed together inside the box-shaped main body.

4. The mineral water acquisition device according to claim 1, wherein:
the second water purification tank is disposed further downstream than the first water purification tank, and further downstream than the flow path switching valve that is provided in a pipe of the flow path that connects the first water purification tank and the second water purification tank.

5. The mineral water acquisition device according to claim 1, wherein:
the filter material of the second water purification tank includes at least one of either activated carbon and a hollow filter membrane.

6. The mineral water acquisition device according to claim 1, wherein:
a mineral agent provided inside the mineral addition tank includes at least one or more of mineral additives in which adjusted weathered coral, natural ore, bioceramic, and a calcium material and a magnesium material are formed into granules or particles.

7. The mineral water acquisition device according to claim 1, wherein:
a motor of the drive pump uses a direct-current power supply as a startup power supply.

8. The mineral water acquisition device according to claim 1, wherein:
the battery that is provided inside the housing can be connected to a vehicle-mounted battery by a connecting means including a cigar lighter socket.

9. The mineral water acquisition device according to claim 1, wherein:
the battery that is provided inside the housing can be electrically connected to a photovoltaic power generation device by an input terminal, the photovoltaic power generation device being composed of a solar box that is a horizontally elongated rectangular parallelepiped in shape, a rectangular solar panel that is rotatably provided inside the solar box with a rotation shaft therebetween, and a handle that is attached to a free end portion of the solar panel, in which the solar panel can be pulled out in a carpet-like manner from a horizontally elongated cutout window that is formed in one side wall of the solar box as a result of the handle being operated.

10. The mineral water acquisition device according to claim 1, wherein:
the battery that is provided inside the housing is electrically connected to a photovoltaic power generation device, the photovoltaic power generation device being a solar panel that is wound around a rotation shaft inside the housing, in which the solar panel can be pulled out in a carpet-like manner from a horizontally elongated cutout window that is formed in one side wall of the housing.

11. The mineral water acquisition device according to any one of claims 8 to 10, wherein:
the battery that is provided inside the housing can be connected to a commercial alternating-current power supply with a converter and a conductive cable therebetween.
